# EUROPEAN PATENT APPLICATION

(11) **EP 4 498 586 A1**
(43) Date of publication of application: **29.01.2025**
(21) Application number: 24190774.0
(22) Date of filing: 25.07.2024
(51) Int. Cl.: H02M 1/00, H02M 3/07, G06F 30/34

(54) **SCALABLE SWITCH CAPACITOR VOLTAGE REGULATORS**

(30) Priority: 26.07.2023 US 202318359584
(71) Applicant: Avago Technologies International Sales Pte. Limited, Singapore 768923 (SG)
(72) Inventor: Ali, Anwar, Irvine, 92618 (US); Church, James Robert, Irvine, 92618 (US); Chandrasekaran, Sriganesh, Irvine, 92618 (US)
(74) Representative: Dilg, Haeusler, Schindelmann Patentanwaltsgesellschaft mbH

(57) **Abstract**

A solution for regulating a voltage for a broad range of integrated circuits (132), ICs, using a plurality of switch capacitor voltage regulator circuits (112) is disclosed. A system (100) can include a plurality of circuits (112) configured to provide a voltage output (106) responsive to a voltage input (104). Each circuit (112) can include a plurality of switches (116) and one or more capacitors (114) and can be coupled in parallel with each of other circuits (112) of the plurality of circuits (112), so that an input of each circuit (112) is coupled to the voltage input (104) and an output of each circuit (112) is coupled to the voltage output (106). The plurality of switches (116) of each circuit (112) can be configured to switch on and off at a phase (308) that is different from a phase (308) of at least one another plurality of switches (116) of another circuit (112) of the plurality of circuits (112).

## Description

### TECHNICAL FIELD

The present disclosure generally relates to voltage regulators, including but not limited to switch capacitor voltage regulators.

### BACKGROUND

Voltage regulators can be used to maintain a steady output voltage for circuits and devices used in a variety of applications. Voltage regulators can utilize varying or unregulated voltage and provide a stable voltage output. Voltage regulators can vary based on design and they can offer varying efficiencies, costs, and performance characteristics.

### SUMMARY

The present disclosure is directed to scalable switch capacitor voltage regulators that can power a broad range of circuitries from beneath the dies on which the circuitries are disposed. Circuitries (e.g., integrated circuitries or ICs) often rely on voltage regulators to convert input voltages from power supplies into more stable voltage outputs powering the circuitries at their desired levels of input. However, in order to accommodate varying levels of voltage utilized by different circuitries across different applications and systems, voltage regulators, such as switch capacitor voltage regulators (SCVR), may be redesigned for each particular application individually. As a result, accommodating specific power and stability preferences for each different circuitry having its input power regulated by a voltage regulator, usually involves redesigning the voltage regulators for that specific application, adding complexity, cost, and inefficiency. Moreover, placing the voltage regulators around the outer perimeter of the circuitry being powered can be challenging as the space around the perimeter of the circuitry can be limited. The present solution overcomes these challenges by providing a scalable voltage regulator design that accommodates a broad range of circuitries, while connecting to the circuitry from beneath the dies in which circuitries are formed, thereby not utilizing the limited space around the outer perimeter of the circuitry.

In some aspects, the present solution relates to a system. The system can include a plurality of circuits arranged to provide a voltage output responsive to a voltage input. Each circuit of the plurality of circuits can include a plurality of switches and one or more capacitors. Each circuit of the plurality of circuits can be coupled in parallel with each of other circuits of the plurality of circuits. An input of each circuit can be coupled to the voltage input and an output of each circuit can be coupled to the voltage output. The plurality of switches of each circuit of the plurality of circuits can be configured to be switched on and off at a phase that is different from a phase of at least one another plurality of switches of another circuit of the plurality of circuits.

A ripple of the output voltage is configured to be reduced according to a number of phases at which the plurality of switches from one or more circuits of the plurality of circuits is turned on or off. The voltage output of the plurality of circuits can be generated according to a sum of outputs of a subset of the plurality of circuits receiving a plurality of signals to control the respective phases of each of the subset of the plurality of circuits according to which each of the plurality of switches of each of the subset of the plurality of circuits is switched on or off.

The system can include a controller providing a plurality of signals to cause the plurality of switches of a first circuit of the plurality of circuits to switch on and off at a first predetermined time that is different than a second predetermined time at which the plurality of switches of a second circuit of the plurality of circuits is switched on and off. The plurality of switches of a first circuit of the plurality of circuits can be configured to be switched on and off according to a first phase that is different than a second phase according to which the plurality of switches of a second circuit of the plurality of circuit are configured to be switched on and off. The first and the second phases can each be different than a third phase according to which the plurality of switches of a third circuit of the plurality of circuits are configured to be switched on and off.

The system can include a memory coupled with the controller. The memory can store one or more instructions to cause the controller to provide the phase for the plurality of switches of each circuit of the plurality of circuits. The controller can be configured to cause the plurality of circuits to provide the voltage output according to a sum of outputs of each of the plurality of circuits. The sum can include at least a first voltage from a first output of a first circuit of the plurality of circuits and a second voltage from a second output of a second circuit of the plurality of circuits.

The system can include a first circuit of the plurality of circuits that includes a first one or more switches of the plurality of switches of the first circuit. The first one or more switches can be configured to cause a first one or more capacitors of the one or more capacitors of the first circuit to charge when the first one or more switches are switched off and discharge when the first one or more switches are switched on. The first circuit can include a second one or more switches of the plurality of switches of the first circuit. The second one or more switches can be configured to cause the first one or more capacitors to charge when the second one or more switches are switched on and discharge when the second one or more switches are switched off. The system can include a controller electrically coupled with the plurality of circuits. The controller can be configured to provide a first plurality of signals to cause the first one or more switches and the second one or more switches to switch on and off at a same time.

The system can include a die comprising a circuitry powered by the voltage output of the plurality of circuits. The plurality of circuits can be disposed beneath the die and the voltage output can be provided to the circuitry using one or more vias oriented vertically and electrically coupled with the circuitry at the die. The system can include a die comprising a circuitry powered by the voltage output of the plurality of circuits. At least a portion of a first circuit of the plurality of circuits can be formed within one of an interposer, a package, or a printed circuit board. The one of the interposer, the package or the printed circuit board can include an outer surface supporting the die thereon.

The system can include a die comprising a circuitry powered by the voltage output of the plurality of circuits. The die can be supported on an outer surface of an interposer that is supported on an outer surface of a package. The one or more capacitors of a first circuit of the plurality of circuits can be at least partly disposed within the interposer and the plurality of switches of the first circuit can be disposed beneath the one or more capacitors of the first circuit. The plurality of switches of the first circuit can be electrically coupled with the one or more capacitors of the first circuit using a first one or more vias oriented vertically. The first plurality of switches can be disposed on the package located beneath the interposer. The one or more capacitors can be electrically coupled with the circuitry of the die using a second one or more vias oriented vertically.

In some aspects, the present disclosure is directed to a method. The method can include a plurality of circuits providing a voltage output responsive to a voltage input. Each circuit of the plurality of circuits can include a plurality of switches and one or more capacitors. The method can include coupling, by each circuit of the plurality of circuits, input of each respective circuit to the voltage input of the plurality of circuits and output of each respective circuit to the voltage output of the plurality of circuits. The plurality of circuits can be arranged in parallel with each of other circuits of the plurality of circuits. The method can include switching the plurality of switches of each circuit of the plurality of circuits on and off at a phase that is different from a phase of at least one another plurality of switches of another circuit of the plurality of circuits.

The method can include reducing, by the plurality of circuits, a ripple of the output voltage according to a number of phases at which the plurality of switches from one or more circuits of the plurality of circuits is turned on or off. The method can include generating, by the plurality of circuits, the voltage output according to a sum of outputs of a subset of the plurality of circuits receiving a plurality of signals to control the respective phases of each of the subset of the plurality of circuits according to which each of the plurality of switches of each of the subset of the plurality of circuits is turned on or off.

The method can include providing, by a controller, a plurality of signals to cause the plurality of switches of a first circuit of the plurality of circuits to switch on and off at a first predetermined time that is different than a second predetermined time at which the plurality of switches of a second circuit of the plurality of circuits switches on and off. The method can include switching the plurality of switches of a first circuit of the plurality of circuits on and off according to a first phase. The method can include switching the plurality of switches of a second circuit of the plurality of circuits on and off according to a second phase that is different than the first phase. The method can include switching the plurality of switches of a third circuit of the plurality of circuits on and off according to a third phase that is different than the first phase and different than the second the second phase.

The method can include switching, by a first circuit of the plurality of circuits, a first one or more switches of the plurality of switches of the first circuit to cause a first one or more capacitors of the one or more capacitors of the first circuit to charge when the first one or more switches are switched off and discharge when the first one or more switches are switched on. The method can include switching, by the first circuit, a second one or more switches of the plurality of switches of the first circuit to cause the first one or more capacitors to charge when the second one or more switches are switched on and discharge when the second one or more switches are switched off. The method can include providing, by a controller electrically coupled with the plurality of circuits, a first plurality of signals to cause the first one or more switches and the second one or more switches to switch on and off at a same time. The method can include powering a circuitry on a die using the voltage output of the plurality of circuits. The plurality of circuits can be disposed beneath the die. The voltage output can be provided to the circuitry using one or more vias oriented vertically and electrically coupled with the circuitry at the die.

In some aspects, the present solution is directed to a system. The system can include a plurality of circuits arranged beneath a die to provide a voltage output to a circuitry comprised by the die in response to a voltage input. Each circuit of the plurality of circuits can include a plurality of switches and one or more capacitors. Each circuit of the plurality of circuits can be coupled in parallel with each of other circuits of the plurality of circuits. An input of each circuit can be coupled to the voltage input and wherein an output of each circuit is coupled to the voltage output. The plurality of switches of each circuit of the plurality of circuits can be configured to be switched on and off at a phase that is different from a phase of at least one another plurality of switches of another circuit of the plurality of circuits. The voltage output can be electrically coupled with the die using one or more vias oriented vertically.

### BRIEF DESCRIPTION OF THE DRAWINGS

These and other aspects and features of the present embodiments will become apparent to those ordinarily skilled in the art upon review of the following description of specific embodiments in conjunction with the accompanying figures.
FIG. 1 is an example block diagram of a system for regulating a voltage for a broad range of circuitry using a voltage regulator that includes a plurality of switch capacitor voltage regulator circuits.
FIG. 2 is an example of regulator circuit in a voltage regulator used for regulating a voltage for a broad range of circuitry.
FIG. 3 is an example of plot showing voltage ripples in a voltage output of a voltage regulator or a regulator circuit, plotted with respect to a time axis.
FIG. 4 is an example of a scalable voltage regulator including a plurality of regulator circuits utilizing switches and capacitors to regulate an output voltage.
FIG. 5 is an example of a diagram of a cross-sectional view of regulator circuits provided alongside semiconductor dies disposed on a package.
FIG. 6 is an example of a diagram of a cross-sectional view of regulator circuits provided in an interposer disposed beneath the semiconductor dies and on top of a package.
FIG. 7 is an example of a diagram of a cross-sectional view of regulator circuits having capacitors provided in an interposer and the remainder of the regulator circuits provided on top of a package disposed beneath the interposer.
FIG. 8 illustrates an example flow diagram of a method for regulating a voltage for various circuitries using a voltage regulator having a plurality of switch capacitor voltage regulator circuits.

### DETAILED DESCRIPTION

The present embodiments shall now be described in detail with reference to the drawings, which are provided as illustrative examples of the embodiments so as to enable those skilled in the art to practice the embodiments and alternatives apparent to those skilled in the art. Figures and examples below are not meant to limit the scope of the present embodiments to a single embodiment, but other embodiments are possible by way of interchange of some or all of the described or illustrated elements, or those apparent to a person of ordinary skill in the art. Certain elements of the present embodiments can be partially or fully implemented using known components, only those portions of such known components that are necessary for an understanding of the present embodiments shall be described, and detailed descriptions of other portions of such known components will be omitted so as not to obscure the present embodiments. Embodiments described in their illustrated contexts should not be limited thereto. For example, embodiments described as being implemented in software should not be limited to such implementation alone, but they can include embodiments implemented in hardware, or combinations of software and hardware, and vice-versa, as will be apparent to those skilled in the art, unless otherwise specified herein. In the present specification, an embodiment showing a singular component should not be considered limiting; rather, the present disclosure is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present embodiments encompass present and future known equivalents to the known components referred to herein by way of illustration.

A processing circuitry, such as an integrated circuitry (IC), can be powered by a power supply whose power output is regulated (e.g., reduced) from a larger voltage level down to a lower voltage level. Such voltage regulation can be implemented by a voltage regulator. The voltage regulator can include, for example, a switch capacitor voltage regulator (SCVR), used to control (e.g., reduce) the received input voltage from the power supply from one level of voltage (e.g., a higher voltage, Vin) to another level of voltage (e.g., a lower voltage, Vout). The output voltage can then be input into the processing circuitry to provide the circuitry running based on the voltage output from the voltage regulator with a steady and constant power supply tailored to the preferences of the circuitry.

Since a voltage regulator can operate by charging and discharging a capacitor network via a series of out-of-phase switches, the resulting voltage output from the voltage regulator can have voltage ripples. A voltage ripple can include any variation or fluctuation in the output voltage around a desired or target value of the output. The ripples can be modulated (e.g., reduced or attenuated) based on the number of phases and switches in the voltage regulator. For example, increasing the number of switches and the number of phases at which the switches are switched on and off (e.g., to allow the capacitors of the voltage regulator to charge and discharge) can reduce the voltage ripple in the voltage output of the regulator. However, since capacitors and switches of the voltage regulator are normally customized to accommodate a particular operating range of a particular IC they power, these capacitors and switches are usually integrated alongside the IC. This results in the unique voltage regulators being created for each use case or IC, adding a level of complexity, cost and inefficiency. Moreover, as capacitors and other circuitry of the voltage regulator are normally around the outer perimeter of the IC, it can be difficult to find the sufficient space for all the capacitors as the perimeter space can be limited.

The present disclosure overcomes these challenges by providing a scalable switch capacitor regulator solution that can be controlled and configured to accommodate a broad range ICs over a broad range of power levels and power output profiles (e.g., ripple sizes). As the present solution can be implemented beneath the die of the IC being powered, the present solution is also not subject to the limitations of the outer perimeter space surrounding the IC. Accordingly, the scalable switch capacitor voltage regulator solution both provides a single solution for a variety of IC designs and applications, while also allowing the voltage regulator to be coupled with the IC it powers from beneath the IC, thereby not occupying the perimeter IC space.

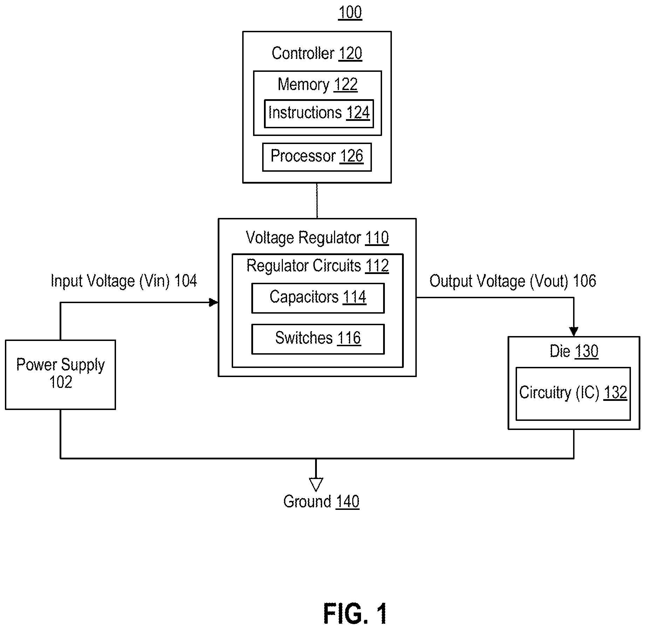

FIG. 1 is an example block diagram of a system 100 for regulating a voltage for a broad range of integrated circuit (IC) or otherwise circuitry 132 that use a voltage regulator 110 having a plurality of switch capacitor voltage regulator circuits, also referred to as the circuits 112. System 100 can include one or more power supplies 102 providing one or more input voltages (Vin) 104 to one or more voltage regulators 110. Each voltage regulator 110 can include one or more regulator circuits 112, each of which can include one or more capacitors 114 and switches 116. System 100 can include one or more controllers 120 that can include one or more memories 122 storing instructions 124 that can be processed by a processor 126 to provide control signals for controlling the timing (e.g., phases) for switching on and off switches 116 to control the charging and discharging of the capacitors 114 at regulator circuits 112 of the voltage regulator 110. Voltage regulator 110 can provide an output voltage (Vout) 106 to a die 130 that can include or provide a circuitry 132 operating based on Vout 106. Each of the power supply 102, die 130, voltage regulator 110, phase controller 120 and the circuitry 132 can be also coupled with the ground 140.

Power supply 102 can include any combination of hardware and software for providing electrical power to a circuit, device or a system. Power supply can serve as the source of electrical energy, such as for example, converting alternating current (AC) power from the electrical mains or a direct current (DC) power, such as from a battery, into a form suitable for the circuitry 132 being powered by the Vout 106. Power supply 102 can include a battery or another circuit providing a particular voltage and/or current controlled output. Power supply 102 can couple or interface with a voltage regulator 110 to form a combination of components that provide a more stable and/or regulated output voltage for powering a particular electronic circuitry 132.

Voltage regulator 110 can include any combination of hardware and software that provides or maintains a constant and stable output voltage 106 (e.g., to within a desired tolerance level) regardless of variations in the input voltage 104 or changes in the load of the circuitry 132 powered by the voltage regulator 110. Voltage regulator 110 can be interface with the power supply 102 to receive the power from the power supply 102 and maintain the output voltage 106 within a specific range (e.g., particular voltage output range suitable for circuitry 132. For example, a voltage regulator 110 can provide a reliable and consistent voltage to the circuitry 132. The combination of a power supply 102 and a voltage regulator 110 can be used to provide a specified or desired level of voltage to operate and protect components, such as circuitry 132 that can be sensitive to voltage variations.

Voltage regulator 110 can include one or more regulator circuits 112 utilizing switches 116 to charge and discharge capacitors 114 per control or command signals from a controller 120. For instance, a voltage regulator 110 can include any number of regulator circuits 112 that can be arranged or coupled with each other in parallel, or any combination of a series and a parallel configuration, to provide a desired output voltage 106 with a given stability (e.g., desired range of ripple voltage).

Circuits 112, also referred to as the regulator circuits 112, can include any circuitry or combination of hardware and software that regulate voltage output. Circuits 112 can utilize circuitry using switches 116 to control operation (e.g., charging or discharging) of capacitors 114 to provide at least portion of output voltage 106 of the voltage regulator 110. Regulator circuit 112 can include a switch capacitor voltage regulator utilizing switches 116 to time and control the charging and discharging of capacitors 114 (e.g., in different phases) based on signals from a controller 120. Regulator circuit 112 can have its switches 116 arranged or configured so as to divide the input voltage 104 into phases where the switches 116 connect the input source (e.g., Vin 104) to capacitors 114 for charging the capacitors 114.

Regulator circuit 112 can have its switches 116 arranged and configured so as to time and control the charge and discharge of the capacitors 114 to cause a timely release of their stored energy according to the phases of the capacitors 114. This can cause the output 212 of the individual circuits 112 (e.g., connected in parallel) to have their individual outputs 212 accumulate or combine to provide, generate or produce the output voltage 106 of the voltage regulator 110.

Regulator circuit (RC) 112 can use switches 116 to control the timing and duration of the charging and discharging of the capacitors 114 according to the timing and switching sequences provided by the controller 120, allowing each of the plurality of regulator circuits 112 to discharge their capacitors 114 such that the combined output voltage 106 (e.g., from the plurality of regulator circuits 112) provides a steady output with a voltage ripple 302 that is within a desired tolerance or range. Switches 116 of the regulator circuit 112 can control the charging and discharging of capacitors 114 in the regulator circuit 112 across any number phases (e.g., at predetermined time intervals at which the switches 116 are turned on or off by the controller 120). For instance, by controlling the state of the switches 116, the voltage across specific capacitors 114 can be manipulated, allowing the regulator circuit 112 to increase or decrease the input 210 to the desired output 212, thereby providing (e.g., together with other regulator circuits 112 coupled in parallel) a desired or target output voltage 106. For example, switches 116 can, in accordance with their timing or phase, connect and disconnect the capacitors 114 from the circuit, enabling the transfer of electrical charge in accordance with various phases. This switching action, facilitated by the switches 116, can enable the regulator circuit 112 to time and synchronize outputs 212 from various regulator circuits 112, providing a stable output voltage 106.

Capacitor 114 can include any passive electronic component in a circuit that stores and releases electrical energy. Capacitor 114 can include two conductive components (e.g., parallel foils or plates) that can be separated by a dielectric material or gas. When a voltage is applied across a capacitor 114, the capacitor 114 can charge and accumulate electric potential energy on the plates or foils. The accumulated energy can be stored in an electric field between the plates or foils of the capacitor 114. The capacitor can discharge the stored energy when needed (e.g., upon turning on or off a switch 116) releasing the stored back into the circuit (e.g., towards a Vout 106). Capacitor 114 can be used for various purposes, such as energy storage, filtering, decoupling, and timing. Capacitor 114 can be used to smooth out voltage fluctuations, such as by smoothing a voltage ripple in the output voltage 106, store charge for short-term power delivery, and control the timing of energy release. Capacitors 114 can vary in type, sizes, and capacitance values to suit different circuit designs.

Switch 116 can include any type of an electronic device for switching on or off current flow in a circuit. Switch 116 can use a transistor switch, such as a bipolar junction transistor (BJT) or a field-effect transistor (FET), such as a metal-oxide-semiconductor FET (MOSFET), including a p-channel metal-oxide-semiconductor (PMOS) or an n-type metal oxide semiconductor (NMOS) which can be used to control the flow of current in a circuit. For example, a switch 116 can operate in two states, such as an on state and an off state. When the switch 116 is on, the transistor can allow the current to flow through the circuit, effectively completing the path for the current. Likewise, when the switch 116 is off, the transistor can block the flow of current, creating an open circuit and preventing the current to pass through the circuit. By applying a control signal to the transistor, such as at the base (for BJT) or gate (for a FET, MOSFET, PMOS or NMOS), the switch 116 can be toggled between the on and off states, thereby either enabling the flow of current or blocking the flow of the current in the circuit. The control signal can be provided by a controller 120, such as by using instructions 124 processed by a processor 126.

Controller 120 can include any combination of hardware and software for controlling the phase 308 at which switches 116 are switched on or off. Controller 120 can generate and provide signals (e.g., control signals) to control or govern the behavior of switches 116 used to charge or discharge capacitors. For example, controller 120 can use a processor 126 to access and process instructions 124 (e.g., code or commands) stored in a memory 122 to generate control signals to control the timing at which specific switches 116 at each regulator circuit 112 of the plurality of regulator circuits 112 in a voltage regulator 110 switches on or off.

Controller 120 can include a processor 126 that can process commands, instructions or data, such as instructions 124 stored in memory 122 and act as a central control unit to determine the timing and sequence of switch 116 operations to regulate the individual outputs 212 from regulator circuits 112 and therefore the combined output voltage 106 of the voltage regulator 110 (e.g., the plurality of regulator circuits 112). Controller 120 can generate signals to activate or deactivate the switches 116 based on the desired voltage level and feedback. By coordinating the switching actions, the controller 120 can allow the capacitors 114 to charge or discharge in accordance with the appropriate phases (e.g., specific charge and discharge time intervals), thereby maintaining desired individual outputs 212 from each regulator circuit 112 as well as the stable and desired output voltage 106. For example, a precise control of the controller 120 over switches 116 in a plurality of regulator circuits 112 (e.g., of a voltage regulator 110) can allow for a steady output voltage 106 regardless of potentially varying input voltage 104 or varying load conditions on the die 130 and/or circuitry 132.

Memory 122 can include any type and form of a data storage or a memory device. Memory 122 can store data or instructions used for functioning of the controller 120. Memory can store or hold program code, variables, configuration settings, and other data for performing the tasks of the controller 120. Memory 122 can be in various forms, such as volatile random access memory (RAM), non-volatile read-only memory (ROM), or flash memory. Memory 122 can include dynamic RAM, static RAM or any other type of RAM. Processor 126 of the controller 120 can access and retrieve data (e.g., instructions 124) from the memory 122 as needed, and execute instructions 124, process data, make decisions and generate signals for controlling timing (e.g., phases) for switching switches 116 of the regulator circuits 112 on and off, based on the stored information. The stored information can include instructions 124, including commands, computer code or instructions to perform tasks (e.g., generating signals for controlling the switches 116 according to their respective phases), as well as data on the phases of each of the switches 116 and timing for turning the switches on or off.

Processor 126 can include any combination of hardware and software, such as a central processing unit, that can perform computational tasks and execute instructions 124. Processor 126 can control the operation of the controller 120 and generate signals for controlling the switches 116. Processor 126 can fetch instructions 124 from memory 122, decodes the instructions 124, and performs the necessary operations, including calculations, data manipulation, and generating control signals for controlling the switching of different switches 116.

Die 130 can include any piece of semiconductor material (e.g., silicon), on or within which a circuitry 132 is fabricated and provided. Die 130 can provide the structure and/or a substrate for the circuitry 132, supporting various electronic components, transistors, interconnects, and other elements used for allowing circuitry 132 to function and operate. For instance, die 130 can include transistors, resistors, capacitors, interconnects, such as vias, which can be intricately patterned and etched onto the surface of, or within, the semiconductor material. Die 130 can be provided on, or encapsulated within, a protective package 406, such as a plastic or ceramic casing. For example, a die 130 can be supported on an interposer 404 that can be provided on a package 406.

Integrated circuits (ICs) 132 or circuitry 132 can include any combination of hardware and software powered by a voltage regulator 110 (e.g., a plurality of regulator circuits 112). Circuitry 132 can include an integrated circuit or integrated circuitry (IC), such as a processor, controller, field programmable gate array or any other processing, logic or memory device. Circuitry 132 can include any complex network of electronic components and interconnections that can be fabricated on one or more semiconductor chips. Circuitry 132 can include any combination of transistors, resistors, capacitors and any passive and active electronic elements, forming memory locations, processing or logic units of a semiconductor circuit. IC 132 can include a processor, such as a processor 126, a controller, such as a controller 120, a system comprising any number of processing or control circuits. IC 132 can be powered by a voltage regulator 110 (e.g., a plurality of regulator circuits 112) to maintain it at a stable and regulated supplied voltage. Circuitry 132 can include any number of systems, circuits or devices that can be designed to perform specific tasks or functions. For example, circuitry 132 can include electronics circuitry for performing logic operations, amplification, memory storage, or signal processing, individually or within one or more electronic systems or devices. Circuitry 132 can include electronic or electrical devices. Circuitry 132 can include power devices, mechanical devices or systems or electromechanical devices or systems.

Ground 140 can include a reference point or node corresponding to a zero voltage reference. Ground 140 can be connected to the negative terminal of the power supply 102, voltage regulator 110, controller 120 and/or die 130, as well as their respective components and parts. Ground 140 can act as a reference point for data and logic processing, voltage measurements and other circuit operation. Ground 140 can serve as a return path for current flow and can be used to establish a common voltage level for all interconnected components.

Phase 302 for the charging or discharging of the capacitors 114 can be any specific time interval, a time instance or a state in which capacitors 114 in a switch capacitor voltage regulator 110 circuit are either charged or discharged. For instance, the phase 302 or timing at which each of the individual capacitors 114 can implement their energy charge or discharge, whether its start or finish or its duration, can be shifted, offset or moved with respect to the phases 302 (e.g., timing) of other capacitors 114 of other circuits 112. As controller 120 can control the phases 302 (e.g., timing) of the switches 116 controlling the timing of the charging and discharging of the phases, each circuit 112 can have its own capacitor 114 charge and discharge at a slightly offset phase 302 from other capacitors 114 in the overall voltage regulator 110, thereby providing a smoother (e.g., low voltage ripple 302) output. Accordingly, as inputs 210 of each of the individual circuits 112 in a voltage regulator 110 can be connected to the voltage regulator input 104 (thus creating an accumulated input 104 from the inputs 210), and outputs 212 of each of the circuits 112 can be connected to voltage regulator output 106 (thus creating an accumulated output 106 from outputs 212), the voltage ripple 302 at the voltage output 106 can be regulated based on the number of different phases 308 across the capacitors 114 of the individual circuits 212. For example, a greater variety of phases can result in a smoother (e.g., lower voltage ripple 302) output.

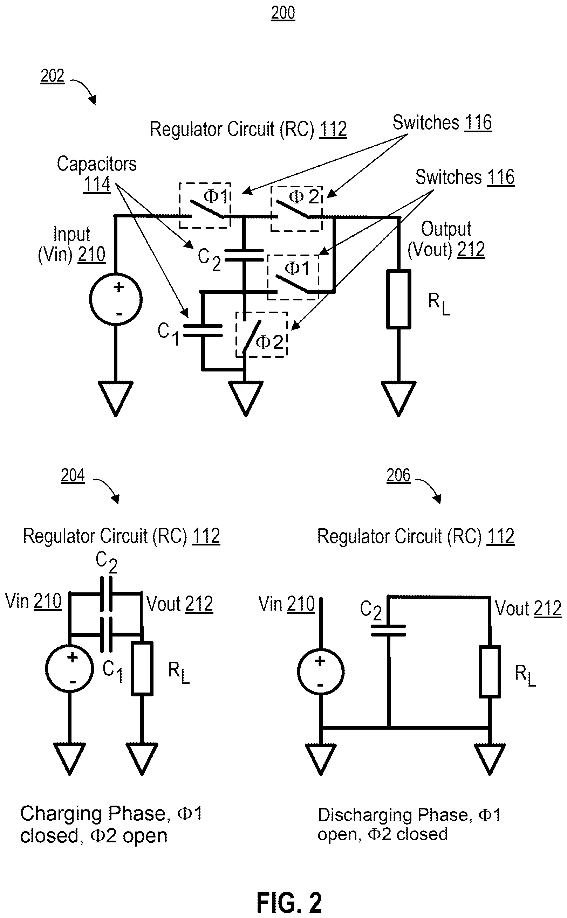

FIG. 2 illustrates example 200, including views 202, 204 and 206, corresponding to a regulator circuit 112 in a voltage regulator 110 used for regulating an output voltage 106 for powering a broad range of circuitry 132. In a view 202, example 200 shows a design of a regulator circuit 112 that can charge and discharge the energy stored at its capacitors 114. In view 204, a simplified version of a RC 112 is illustrated corresponding to a time period when the capacitors 114 of the RC 112 are being charged (e.g., the charging phase). In view 206, example 204 shows a simplified version of the RC 112 during a time period when the capacitors 114 of the RC 112 are being discharged (e.g., the discharging phase).

In view 202, example 200 of a regulator circuit 112 can receive an input (Vin) 210 (e.g., from a Vin 104). RC 112 can include a first plurality of switches 116 (e.g., a first pair of switches 116) operating at a first phase (e.g., phase Φ1) and a second plurality of switches 116 (e.g., a second pair of switches 116) operating at a second phase (e.g., phase Φ2). RC 112 can coordinate the timing of switching on and switching off of the first plurality of switches 116 (e.g., switches 116 having a phase Φ1) and the second plurality of switches 116 (e.g., switches 116 having a phase Φ2) so as to cause one or more capacitors 114 (e.g., capacitors C1 and/or C2) to charge and discharge during particular time intervals (e.g., phases).

In view 204, a charging phase of the RC 112 is illustrated. For instance, the example 200 of the RC 112 can have the first plurality of switches 116 operating in accordance with phase Φ1 closed, while the second plurality of switches 116 operating in accordance with Φ2 are open. In such a configuration, the switches 116 cause the capacitors C1 and/or C2 to charge, thereby making the RC 112 operate in a charging phase. In this configuration, Vin 210 can be coupled to a first plate or foil of the C1 and C2 capacitors, while Vout 212 can be coupled to the other remaining plate or foil of the capacitors. This can cause the energy to be stored in the capacitors C1 and C2.

In view 206, a discharging phase of the RC 112 is illustrated. For instance, the example 200 of the RC 112 can have the first plurality of switches 116 operating in accordance with phase Φ1 open, while the second plurality of switches 116 operating in accordance with Φ2 are closed. In such a configuration, the switches 116 cause the capacitors C1 and/or C2 to discharge, thereby making the RC 112 operate in a discharging phase. In this configuration, Vin 210 can be decoupled from the C1 and C2 capacitors, while Vout 212 can remain coupled to the capacitors (e.g., or at least C2 capacitor). This can cause the energy to be stored in the capacitors C1 and C2 (e.g., C2 capacitor in the view 206) to be discharged, thereby providing an output via Vout 212 to the load, which can be indicated as RL and correspond to the load of the circuitry 132.

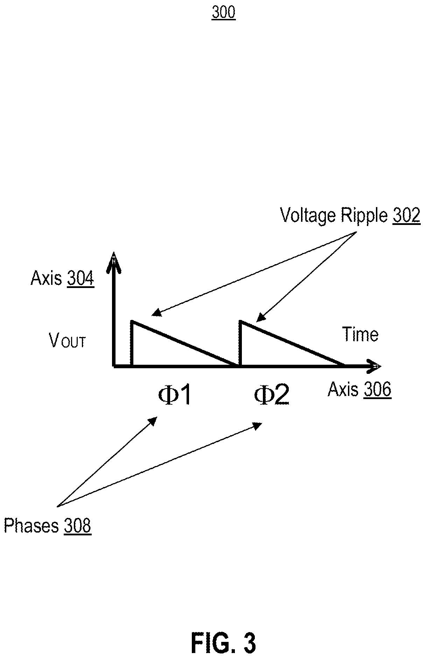

FIG. 3 is an example of plot 300 showing voltage ripples 302 corresponding to phases 308, plotted with respect to a time axis. The voltage ripples 302 and phases 308 can correspond to a output voltage 106 of a voltage regulator 110 or an output voltage 212 of a regulator circuit 112. Plot 300 can include a vertical axis 304 corresponding to a Vout (e.g., 106 or 212) and a horizontal axis 306 corresponding to time. Phases 308 (e.g., Φ1 and Φ2) are plotted along with their corresponding voltage ripples 302. Voltage ripples 302 can be reduced based on a number of phases 308 plotted within the same time interval, such that a larger number of phases over a same time duration can reduce the magnitude (e.g., Vout on axis 304) of the voltage ripples 302.

Accordingly, as a voltage regulator 110 can include a plurality of regulator circuits 112 having their switches 116 operating at a variety of phases 308, each of which can be different (e.g., start and/or finish at a different time than from any other phase 308), the voltage output 106 of the voltage regulator 110 can be increasingly smoother and the magnitude of voltage ripples 302 can be reduced. Therefore, by using any number of RCs 112 from the plurality of RCs 112 and controlling their pairs of switches 116 at phases 308 (e.g., Φ1 or Φ2) to charge and discharge their respective capacitors (e.g., C1 and C2) according to individual and distinct time durations (e.g., phases) for each capacitor, the voltage regulator 110 can control both the level of output voltage 106 across a wide voltage range (e.g.., lowest voltage to highest voltage) and the range (e.g., magnitude) of voltage ripples 302 across a wide ripple voltage range (e.g., lowest voltage to highest voltage).

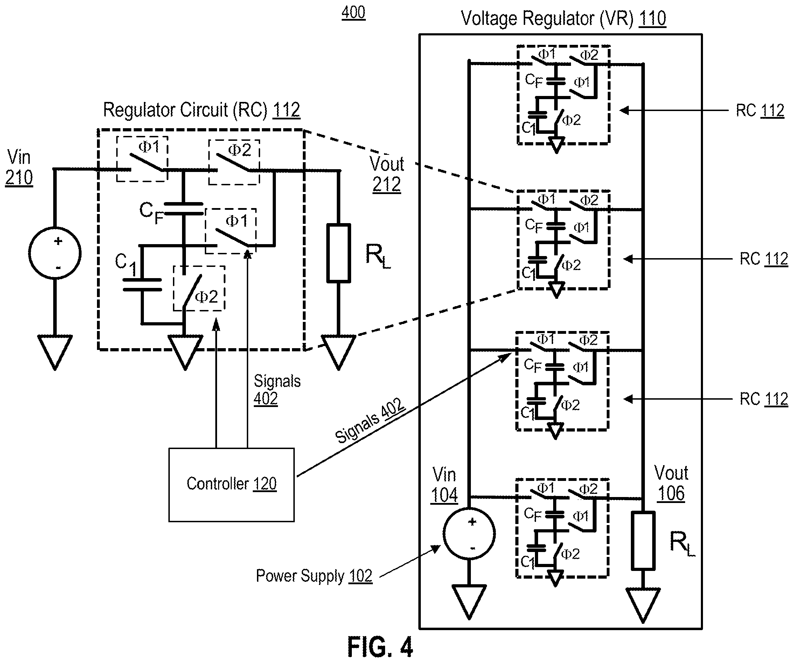

FIG. 4 is an example 400 of a scalable voltage regulator 110 including a plurality of regulator circuits 112 utilizing switches 116 and capacitors 114 to regulate output voltage 212 from the RCs 112 and the output voltage 106 from the voltage regulator 110. Example 400 shows a voltage regulator 110 having four different RCs 112, although any number of RCs 112 can be included. For example, a voltage regulator 110 can include up to 2, 4, 6, 8, 10, 12, 16, 20, 24, 32, 40, 60, 64, 96, 128, 152, 200, 256, 500 or more than 500 RCs 112. Each RC 112 can include the configuration as described in connection with FIG. 2 and include a first pair of switches 116 operating at a first phase 308 (e.g., Φ1) and a second pair of switches 116 operating at a second phase 308 (e.g., Φ2). Controller 120 can provide signals 402 (e.g., control signals) to voltage regulator 110 and/or RCs 112 to control the individual switches 116 in accordance with their respective phases 308. Power supply 102 can provide input voltage 104 to the RCs 112, each of which can be coupled in parallel with each other RC 112 of the plurality of RCs 112. The plurality of RCs 112 of the voltage regulator 110 can have their individual outputs 212 coupled to the Vout 106 to provide it to the load (e.g., circuitry 132).

Although example 400 shows all of the RCs 112 coupled in parallel with each other, it is understood that RCs 112 can be coupled in any combination of series and parallel coupling. For example, a configuration can include a plurality of RCs 112 coupled in a series and then a plurality of such RCs 112 series can be connected in parallel with each other, resulting in the parallel configuration of a plurality of RCs 112 coupled in a series. Each of the switches 116 of each of the RCs 112 can be operated in accordance with a phase 308 that can be the same or different than another phase 308 in accordance with which another switch 116 is operated.

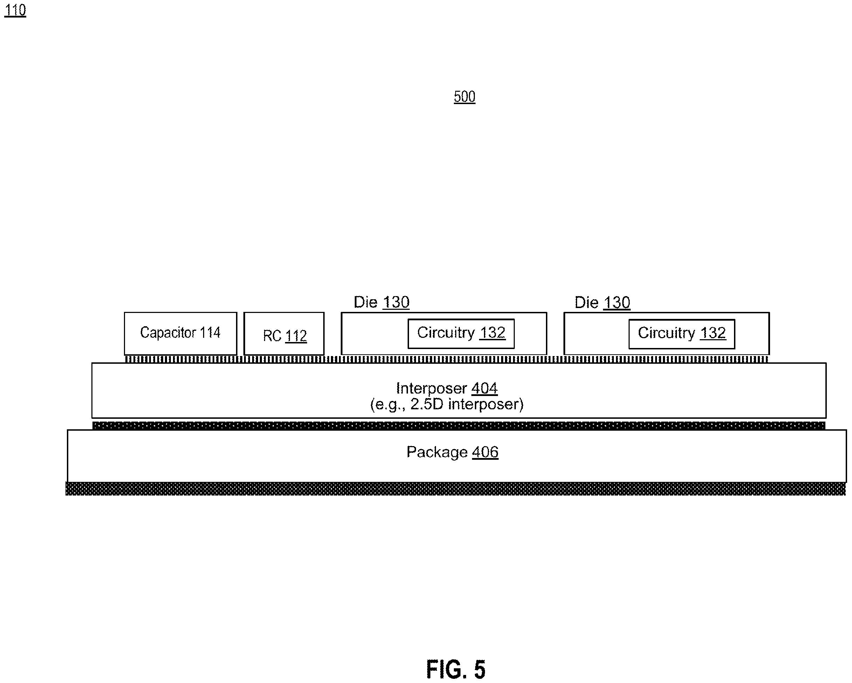

FIG. 5 is an example of a diagram of a cross-sectional view 500 of a regulator circuit 112 provided alongside semiconductor dies 130 disposed (e.g., provided, supported, located or positioned) on a package 406. In cross-sectional view 500, a plurality of dies 130 comprising circuitry 132 can be disposed on an interposer 404, which can be further disposed on a package 406.

An interposer 404 can include any substrate or a platform (e.g., semiconductor material) that allows for the integration of multiple semiconductor dies 130 by providing a bridge between them, facilitating communication and electrical connections to and from the circuitry 132 in the dies 130. Interposer 404 can be referred to a 2.5D interposer as it can allow for interconnection and integration of multiple dies and components, including memory, logic, vias, or RCs 112 and their components. A package 406 can include an enclosure or housing that surrounds and protects the interposer 404, providing mechanical support and electrical connections while facilitating the integration of the interposer 494 and semiconductor dies 130 and their circuitry 132 into a complete module or a device. Package 406 can include a printed circuit board (PCB) and can be mounted on a PCB. Package 406 can also include a PCB or be integrated with the PCB that can support one or more interposers 404 with the circuitry 132 in one or more dies 130.

In the cross-sectional view 500, regulator circuit 112 can be disposed beside (e.g., alongside the outer perimeter of) the dies 130. Sometimes, the outer perimeter space can be crowded or limited, making it difficult to place the capacitors 114 and/or other RC 112 circuits alongside the dies 130. In such instances, at least a portion of the RCs 112 and/or their components (e.g., capacitors 114 or switches 116) can be disposed, located or placed beneath the dies 130. As capacitors 114 can occupy a similar amount of space as other RC 112 components (e.g., switches 116 and interconnects), locations of capacitors 114 can be illustrated separately from locations of the remainder of their corresponding RCs 112.

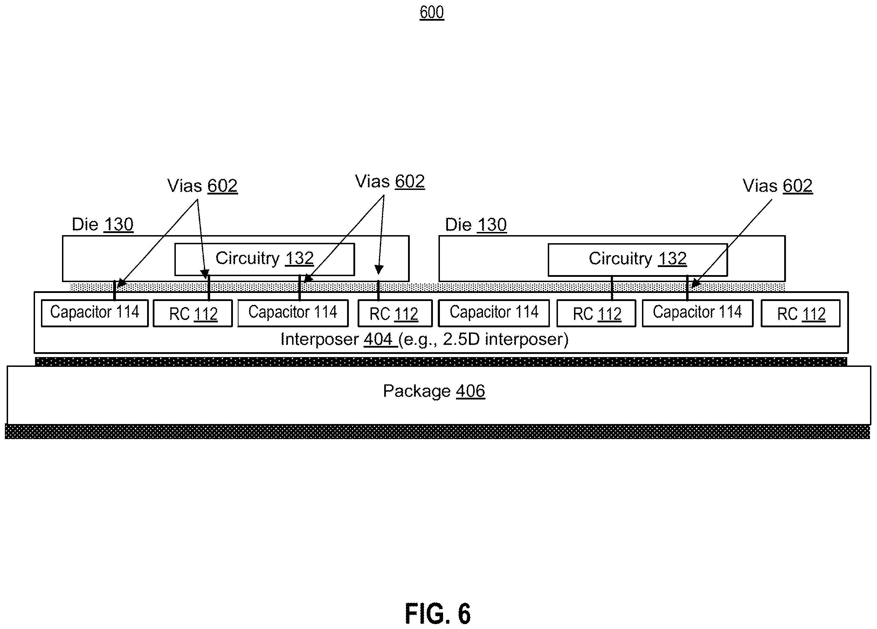

FIG. 6 is an example of a diagram of a cross-sectional view 600 of regulator circuits 112 provided in an interposer 404 disposed beneath the semiconductor dies 130 and on top of a package 406. Illustrated in the cross-sectional view 600, RCs 112 and/or their capacitors 114 can be disposed, formed or provided at least partly on top of, or within, the interposer 404. For example, RCs 112, including their corresponding capacitors 114 can be formed, fabricated or provided on top of, or along a top surface of, the interposer 404 that can support on its top surface a plurality of dies 130 having circuitries 132. Beneath the interposer 404, package 406 can be provided. RCs 112 and their capacitors 114 can be connected with the dies 130 and/or circuitry 132 using vertical (e.g., approximately vertical) vias 602 and/or other interconnects (e.g., metal horizontal contacts), thereby allowing the RCs 112 to be located near (e.g., next to) the circuitry 132 in order to reduce the power loss (e.g., heat dissipation) due to long connections between the RCs 112 and the circuitry 132. Therefore, connecting the RCs 112 with the circuitry 132 using vertical vias 602 and other interconnects in order to shorten the connection path between the RCs 112 and the circuitry 132 can reduce power losses and save energy (e.g., 5% or 10% of energy that can be lost due to long connections on the outer perimeters of the circuitry 132 and/or dies 130).

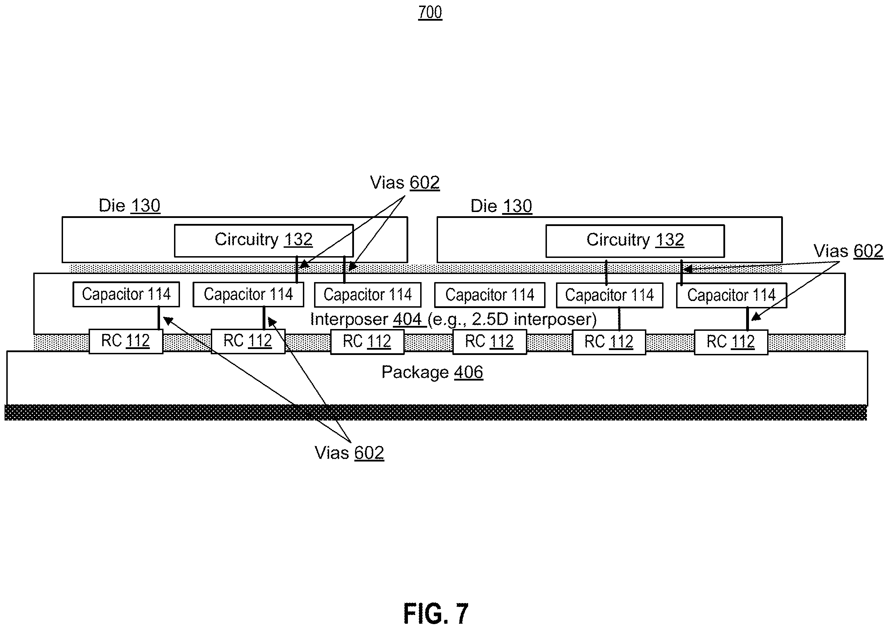

FIG. 7 is an example of a diagram of a cross-sectional view 700 of regulator circuits 112 having capacitors 114 provided in an interposer 404 and the remainder of the regulator circuits 112 (e.g., switches 116 and interconnects) provided on top of a package 406 that is disposed beneath the interposer 404. For example, the cross-sectional view 700 shows the capacitors 114 of the RCs 112 disposed, formed or provided at least partly on top of, or within, the interposer 404, whereas the remainder of the RCs 112 (e.g., switches 116, interconnects and/or any other circuitry) provided, formed or disposed on top of, or within, the package 406. For example, capacitors 114 can be formed, fabricated or provided directly beneath the dies 130 and directly above the remainder of the RCs 112 on or within the package 406. The RCs 112 can then be interconnected with the capacitors 114 using vertically oriented vias 602. Vertically oriented vias 602 can also be used to connect the capacitors 114 and the dies 130 and/or circuitry 132. Vertically oriented vias 602 can be approximately vertically oriented to within plus or minus 10 degrees from the vertical line. Connecting the RCs 112 and capacitors 114 with the circuitry 132 using vertical vias 602 and other interconnects in order to shorten the connection path can reduce power losses and save energy.

In an example, the present solution can include a system 100. System 100 can be a part of, or coupled with, an electronic device or a product (e.g., a smartphone, a tablet, a laptop, a computer desktop), an integrated circuit (e.g., a processor or a logic unit), a machine or a vehicle (e.g., an automotive electronics component or system), a system (e.g., an energy generating or management system) and so on. System 100 can include a plurality of regulator circuits 112, also referred to as circuits 112, which can be a part of a voltage regulator 110 system, circuit or device. Circuits 112 can be arranged, organized, interconnected or configured to provide a voltage output 106 responsive to a voltage input 104. Each circuit 112 of the plurality of circuits 112 can include a plurality of switches 116 and one or more capacitors 114. Each circuit 112 of the plurality of circuits 112 can be coupled in parallel with each of other circuits 112 of the plurality of circuits 112. An input (e.g., Vin 210) of each circuit 112 can be coupled to the voltage input 104 of the plurality of circuits 112 (e.g., voltage regulator 110). An output (e.g., Vout 212) of each circuit 212 can be coupled to the voltage output 106. The plurality of switches 116 of each circuit 112 of the plurality of circuits 112 can be switched on and off at a phase 308 that is different from a phase 308 of at least one another plurality of switches 116 of another circuit 112 of the plurality of circuits 112.

System 100 can include a configuration to reduce or regulate a voltage ripple 302 from the voltage output 106. For example, ripple 302 can be reduced according to a number of phases 308 at which the plurality of switches 116 from one or more circuits 112 of the plurality of circuits 112 (e.g., voltage regulator 110) is switched or turned on or off. Voltage output 106 of the plurality of circuits 112 (e.g., voltage regulator 110) can be configured to be generated according to a sum of outputs (e.g., Vouts 212) of a subset of the plurality of circuits 112 receiving a plurality of signals 402 to control the respective phases 308 of each of the subset of the plurality of circuits 112 according to which each of the plurality of switches 116 of each of the subset of the plurality of circuits 112 is switched or turned on or off, or configured to be switched or turned on or off.

System 100 can include a controller 120 configured to provide a plurality of signals 402 to cause the plurality of switches 116 of a first circuit 112 of the plurality of circuits 112 (e.g., voltage regulator 110) to switch on and off at a first predetermined time (e.g., first phase 308) that is different than a second predetermined time (e.g., second phase 308) at which the plurality of switches 116 of a second circuit of the plurality of circuits 112 switches on and off.

System 100 can include the plurality of switches 116 of a first circuit 112 of the plurality of circuits (e.g., voltage regulator 110) that are switched or are configured to be switched on and off according to a first phase 308 that is different than a second phase 308 according to which the plurality of switches 116 of a second circuit of the plurality of circuit are switched, or configured to be switched, on and off. The first and the second phases 308 can each be different than a third phase 308 according to which the plurality of switches 116 of a third circuit 112 of the plurality of circuits (e.g., voltage regulator 110) are switched on and off, or are configured to be switched on and off.

System 100 can include a memory 122 coupled with the controller 120. The memory 122 can store one or more instructions 124 to cause the controller 120 to provide the phase 308 for the plurality of switches 116 of each circuit of the plurality of circuits 112. Controller 120 can be configured to cause the plurality of circuits 112 to provide the voltage output 106 according to a sum of outputs (e.g., Vouts 212) of each of the plurality of circuits 112. The sum can include at least a first voltage from a first output Vout 212 of a first circuit 112 of the plurality of circuits (e.g., voltage regulator 110) and a second voltage from a second output Vout 212 of a second circuit 112 of the plurality of circuits.

System 100 can include a first circuit 112 of the plurality of circuits (e.g., voltage regulator 110) that includes a first one or more switches 116 of the plurality of switches 116 of the first circuit 112 configured to cause a first one or more capacitors 114 of the one or more capacitors 114 of the first circuit 112 to charge when the first one or more switches 116 are switched off and discharge when the first one or more switches 116 are switched on. The first circuit 112 can include a second one or more switches 116 of the plurality of switches 116 of the first circuit 112 configured to cause the first one or more capacitors 114 to charge when the second one or more switches 116 are switched on and discharge when the second one or more switches are switched off. For example, the first one or more switches 116 can operate in accordance with a first phase 308 and the second one or more switches can operate in accordance with the second phase 308.

System 100 can include a controller 120 that is electrically coupled with the plurality of circuits 112 (e.g., voltage regulator 110). Controller 120 can be configured to provide a first plurality of signals 402 to cause the first one or more switches 116 and the second one or more switches 116 to switch on and off at a same time. System 100 can include a die 130 comprising a circuitry 132 powered by the voltage output 106 of the plurality of circuits 112 (e.g., voltage regulator 110). The plurality of circuits 112 can be disposed, located, formed or provided beneath the die 130. For example, the plane in which at least a part of the circuits 112 are oriented, formed, provided or located can be below the plane in which the die 130 is oriented, formed, provided or located. For example, the plane in which at least a part of the circuits 112 are oriented, formed, provided or located can be below the plane in which the circuitry 132 is oriented, formed, provided or located. The voltage output 106 can be provided to the circuitry 132 at the die 130 using one or more electrically conductive vias 602 that can be oriented vertically (e.g., to within 10 degrees from the vertical line) and can be electrically coupled with the circuitry 132 at the die 130. For example, the vias 602 can include electrically conductive material (e.g., metal) oriented vertically, which can be interconnected with various interconnects (e.g., metal lines or contacts) that can be in electrical contact with the circuitry 132 and/or die 130.

System 100 can include a die 130 that can include a circuitry 132 powered by the voltage output 106 of the plurality of circuits 112. At least a portion of a first circuit 112 of the plurality of circuits 112 can be formed within one of an interposer 404, a package 406, or a printed circuit board (e.g., 406). Forming at least the portion of the circuit 112 within the interposer 404, package 406 or PCB 406 can include, for example, forming only partially within, touching or interfacing with or fully forming within. For example, the one of the interposer 404, the package 406 or the printed circuit board can include an outer surface (e.g., a top surface) supporting the die 130 thereon.

System 100 can include a die 130 that can include a circuitry 132 powered by the voltage output 106 of the plurality of circuits 112. Die 130 can be supported on an outer surface of an interposer 404 that can be supported on an outer surface of a package 406. The one or more capacitors 114 of a first circuit 112 of the plurality of circuits 112 (e.g., voltage regulator 110) can be at least partly disposed within the interposer 404. The plurality of switches 116 of the first circuit 112 can be disposed beneath the one or more capacitors 114 of the first circuit 112. The plurality of switches 116 of the first circuit 112 can be electrically coupled with the one or more capacitors 114 of the first circuit 112 using a first one or more vias 602 oriented vertically. The first plurality of switches 116 can be disposed on the package 406 that can be located beneath the interposer 404. The one or more capacitors 114 of the first circuit 112 can be electrically coupled with the circuitry 132 of the die 130 using a second one or more vias 602 oriented vertically.

System 100 can include a plurality of circuits 112 arranged beneath a die 130 to provide a voltage output 106 to a circuitry 132 comprised by the die 130 in response to a voltage input 104. Each circuit 112 of the plurality of circuits 112 can include a plurality of switches 116 and one or more capacitors 114. Each circuit 112 of the plurality of circuits 112 can be coupled in parallel with each of other circuits 112 of the plurality of circuits 112. An input 210 of each circuit 112 can be coupled to the voltage input 104. An output 212 of each circuit 112 can be coupled to the voltage output 106. The plurality of switches 116 of each circuit 112 of the plurality of circuits can be configured to be switched on and off at a phase 308 that is different from a phase 308 of at least one another plurality of switches 116 of another circuit 112 of the plurality of circuits. The voltage output 106 can be electrically coupled with the die 130 using one or more vias 602 oriented vertically.

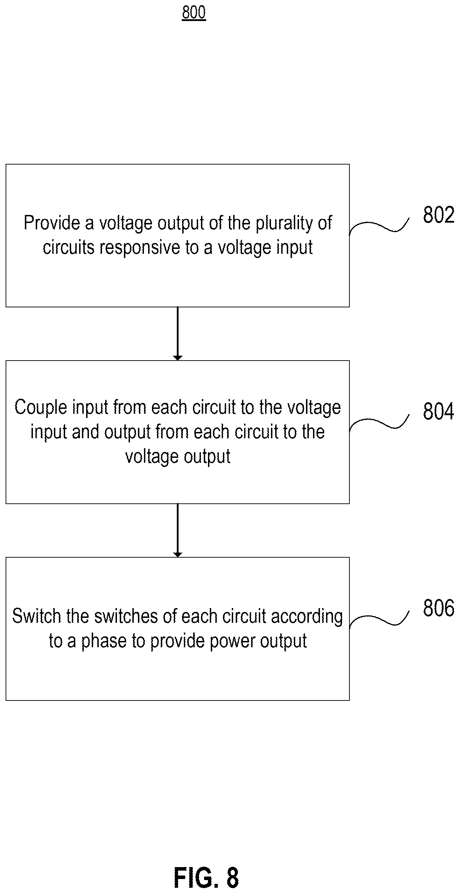

FIG. 8 illustrates an example flow diagram of a method for regulating a voltage for a broad range of circuitry using a voltage regulator including a plurality of switch capacitor voltage regulator circuits. Method 600 can include acts 802 through 806 that can be implemented, for example, using the system 100 of FIGS. 1-4. For example, at 802, the method can include providing a voltage output of the plurality of circuits responsive to a voltage input. At 804, the method can include coupling input from each circuit to the voltage input and output from each circuit to the voltage output. At 806, the method can include switching the switches of each circuit according to a phase to provide power output.

At 802, the method can include providing a voltage output of the plurality of circuits responsive to a voltage input. The method can include providing, by a plurality of circuits, a voltage output responsive to a voltage input. Voltage output can be provided by combining outputs from each of the plurality of circuits. For example, each of the plurality of circuits can receive a voltage input and provide a voltage output responsive to one or more phases used to control the timing of the plurality of switches within each one of the plurality of circuits. A voltage regulator can include a plurality of regulator circuits, each of which can include a plurality of switches controlling charging and discharging of one or more capacitors in accordance with one or more phases.

For example, a voltage regulator can include a plurality of circuits. Each circuit of the plurality can include a first plurality of switches that can be switched on or off according to a first phase and a second plurality of switches that can be switched on or off according to a second phase that is different than the first phase. The first and the second phases can be differential (e.g., opposite) of each other, such that when a first phase is on, the second phase is off and vice versa.

At 804, the method can include coupling input from each circuit to the voltage input and output from each circuit to the voltage output. The method can include coupling, by each circuit of the plurality of circuits, input of each respective circuit to the voltage input of the plurality of circuits and output of each respective circuit to the voltage output of the plurality of circuits. The plurality of circuits can be arranged in parallel with each of other circuits of the plurality of circuits.

The plurality of circuits can include each of the plurality of circuits coupled in parallel with each other. Circuits can be coupled in parallel along the voltage input node for the voltage regulator on one end and a voltage output node of the voltage regulator on the other. For example, the plurality of circuits can include the plurality of circuits coupled with each other in a combination of series and parallel configurations. For example, a first plurality of circuits can be coupled in a first series and a second plurality of circuits can be coupled in a second series. The first and the second series can be coupled in parallel with each other.

The plurality of circuits can include a first circuit having a plurality of switches that can be switched on or off according to a first phase and a second circuit of the plurality of circuits having a second plurality of switches that can be switched on or off according to a second phase that is different than the first phase. The first and the second phases can be differential (e.g., opposite) of each other, such that when a first phase is on, the second phase is off and vice versa, or can be at least partially overlapping. The plurality of circuits can include a plurality of circuits, each of which can include two sets of switches operating at two differential (e.g., mutually exclusive and opposite) phases with respect to each other to charge and discharge their respective one or more capacitors in accordance with their corresponding phases. The plurality of circuits can each have their respective pair of phases offset from the pair of phases of at least one another circuit of the plurality of circuits. For example, the phases of different circuits of the plurality can be partially offset, so as to minimize the voltage ripple. The first and the second circuits can have their phases overlap up to 5%, 10%, 20%, 40%, 60%, 80%, 90% or 100% of their respective duty cycles. Outputs from each of the capacitors discharged according to the phases of the circuits can be coupled to the voltage output of the voltage regulator comprised from the plurality of circuits.

At 806, the method can include switching the switches of each circuit according to a phase to provide power output. The method can include switching the plurality of switches of each circuit of the plurality of circuits on and off at a phase that is different from a phase of at least one another plurality of switches of another circuit of the plurality of circuits. The plurality of circuits can reduce a ripple of the output voltage according to a number of phases at which the plurality of switches from one or more circuits of the plurality of circuits is turned on or off. For example, by cascading the sets of phases of each respective circuit of the plurality of circuits to partially overlap with at least one other set of phases of another circuit of the plurality of circuits, the plurality of circuits can time capacitors of the plurality of circuits to discharge at overlapping time intervals. This can result in the voltage output remaining steady at a particular voltage output and having a ripple voltage that is within a range defined according to the number of capacitors being discharged over the number of phases in a period over which all the capacitors from all the circuits get discharged.

The method can include the plurality of circuits generating the voltage output according to a sum of outputs of a subset of the plurality of circuits receiving a plurality of signals to control the respective phases of each of the subset of the plurality of circuits according to which each of the plurality of switches of each of the subset of the plurality of circuits is turned on or off. The plurality of switches of each of the subset of the plurality of circuits can cause one or more capacitors of their respective circuit to charge and discharge in accordance with their respective phase. The method can include a controller providing a plurality of signals to cause the plurality of switches of a first circuit of the plurality of circuits to switch on and off at a first predetermined time that is different than a second predetermined time at which the plurality of switches of a second circuit of the plurality of circuits switches on and off.

The method can include the plurality of switches of a first circuit of the plurality of circuits switching on and off according to a first phase. The method can include the plurality of switches of a second circuit of the plurality of circuits switching on and off according to a second phase that is different than the first phase. The method can include the plurality of switches of a third circuit of the plurality of circuits switching on and off according to a third phase that is different than the first phase and different than the second the second phase. Each of the first, second and third circuit can have their respective plurality of switches cause the one or more capacitor of the respective circuit change and discharge at a different phase over a period of time, thereby reducing the voltage ripple of the voltage output from the plurality of circuits.

The method can include a first circuit of the plurality of circuits switching a first one or more switches of the plurality of switches of the first circuit to cause a first one or more capacitors of the one or more capacitors of the first circuit to charge when the first one or more switches are switched off and discharge when the first one or more switches are switched on. The method can include the first circuit switching a second one or more switches of the plurality of switches of the first circuit to cause the first one or more capacitors to charge when the second one or more switches are switched on and discharge when the second one or more switches are switched off. The method can include a controller electrically coupled with the plurality of circuits providing a first plurality of signals to cause the first one or more switches and the second one or more switches to switch on and off at a same time. The method can include the voltage regulator comprising the plurality of circuits powering a circuitry on a die using the voltage output of the plurality of circuits. The plurality of circuits can be disposed beneath the die and the voltage output is provided to the circuitry using one or more vias oriented vertically and electrically coupled with the circuitry at the die.

Having now described some illustrative implementations, it is apparent that the foregoing is illustrative and not limiting, having been provided by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

When an element is referred to herein as being "connected" or "coupled" to another element, it is to be understood that the elements can be directly connected or coupled the other element, or have intervening elements present between the connected or coupled elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" beneath or above a particular element, it is to be understood that the elements can be directly located or positioned above or below the other element, or have intervening elements present between the two elements. In contrast, when an element is referred to as being "directly disposed" on or below another element, it should be understood that no intervening elements are present in the "direct" disposition between the elements. However, the existence of a direct disposition does not exclude other disposition, in which intervening elements may be present.

While operations are depicted in the drawings in a particular order, such operations are not required to be performed in the particular order shown or in sequential order, and all illustrated operations are not required to be performed. Actions described herein can be performed in a different order. The separation of various system components does not require separation in all implementations, and the described program components can be included in a single hardware or software product.

## Claims

1. A system (100), comprising:
a plurality of circuits (112) configured to provide a voltage output (106) responsive to a voltage input (104), each circuit (112) of the plurality of circuits (112) comprising a plurality of switches (116) and one or more capacitors (114);
wherein each circuit (112) of the plurality of circuits (112) is coupled in parallel with each of other circuits (112) of the plurality of circuits (112), wherein an input of each circuit (112) is coupled to the voltage input (104) and wherein an output of each circuit (112) is coupled to the voltage output (106); and
wherein the plurality of switches (116) of a first circuit (112) of the plurality of circuits (112) is configured to be switched on and off at a phase (308) that is different from a phase (308) of at least the plurality of switches (116) of a second circuit (112) of the plurality of circuits (112).

2. The system (100) of claim 1, comprising at least one of the following features:
wherein a ripple (302) of the output voltage (106) is configured to be reduced according to a number of phases (308) at which the plurality of switches (116) from one or more circuits (112) of the plurality of circuits (112) is switched on or off.;
wherein the voltage output (106) of the plurality of circuits (112) is generated according to a sum of outputs of a subset of the plurality of circuits (112) receiving a plurality of signals to control the respective phases (308) of each of the subset of the plurality of circuits (112) according to which each of the plurality of switche (116)s of each of the subset of the plurality of circuits (112) is switched on or off;
wherein the plurality of switches (116) of the first circuit (112) of the plurality of circuits (112) switch on and off at a first time that is different than a second time at which the plurality of switches (116) of the second circuit (112) of the plurality of circuits (112) is switched on and off, responsive to a plurality of signals provided by a controller (120).

3. The system (100) of claim 1 or 2, wherein the phase (308) at which the plurality of switches (116) of the first circuit (112) is configured to be switched on and off and the phase (308) at which the plurality of switches (116) of the second circuit (112) is configured to be switched on and off are each different than a third phase (308) at which the plurality of switches (116) of a third circuit (112) of the plurality of circuits (112) is configured to be switched on and off.

4. The system (100) of any of claims 1 to 3, comprising:
a memory (122) coupled with a controller (120), wherein the memory (122) is configured to store one or more instructions for the controller (120) to provide the phase (308) for the plurality of switches (116) of the first circuit (112) and the plurality of switches (116) of the second circuit (112).

5. The system (100) of any of claims 1 to 4, wherein the plurality of circuits (112) provide the voltage output (106) according to a sum of outputs of each of the plurality of circuits (112) responsive to a signal from a controller (120), the sum including at least a first voltage from a first output of the first circuit (112) of the plurality of circuits (112) and a second voltage from a second output of the second circuit (112) of the plurality of circuits (112).

6. The system (100) of any of claims 1 to 5, wherein a first one or more capacitors (114) of the one or more capacitors (114) of the first circuit (112) charge in response to a first one or more switches (116) of the plurality of switches (116) being switched off and discharge in response to the first one or more switches (116) being switched on.

7. The system (100) of claim 6, wherein the first one or more capacitors (114) charge in response to the second one or more switches (116) being switched on and discharge in response to the second one or more switches (116) being switched off.

8. The system (100) of claim 7, comprising:
a controller (120) coupled with the plurality of circuits (112), wherein the first one or more switches (116) and the second one or more switches (116) are switched on and off at a same time responsive to a first plurality of signals from the controller (120).

9. The system (100) of any of claims 1 to 8, comprising:
a die (130) comprising an integrated circuit (132) powered by the voltage output (106) of the plurality of circuits (112), wherein the plurality of circuits (112) are disposed beneath the die (130) and the voltage output (106) is provided to the integrated circuit (132) using one or more vias (602) oriented vertically and coupled with the integrated circuit (132) at the die (130).

10. The system (100) of any of claims 1 to 8, comprising:
a die (130) comprising an integrated circuit (132) powered by the voltage output (106) of the plurality of circuits (112), wherein at least a portion of the first circuit (112) of the plurality of circuits (112) is formed within one of an interposer (404), a package (406), or a printed circuit board, wherein the one of the interposer (404), the package (406) or the printed circuit board includes an outer surface supporting the die (130) thereon.

11. The system (100) of any of claims 1 to 8, comprising:
a die (130) comprising an integrated circuit (132) powered by the voltage output (106) of the plurality of circuits (112), wherein the die (130) is supported on an outer surface of an interposer (404) that is supported on an outer surface of a package (406), wherein the one or more capacitors (114) of the first circuit (112) of the plurality of circuits (112) is at least partly disposed within the interposer (404) and the plurality of switches (116) of the first circuit (112) is disposed beneath the one or more capacitors (114) of the first circuit (112), the plurality of switches (116) of the first circuit (112) coupled with the one or more capacitors (114) of the first circuit (112) using a first one or more vias (602) oriented vertically.

12. The system (100) of claim 11, wherein the first plurality of switches (116) is disposed on the package (406) located beneath the interposer (404) and wherein the one or more capacitors (114) are coupled with the integrated circuit (132) of the die (130) using a second one or more vias (602) oriented vertically.

13. A method, comprising:
providing, by a plurality of circuits (112), a voltage output (106) responsive to a voltage input (104), each circuit (112) of the plurality of circuits (112) comprising a plurality of switches (116) and one or more capacitors (114);
coupling, by each circuit (112) of the plurality of circuits (112), input of each respective circuit (112) to the voltage input (104) of the plurality of circuits (112) and output of each respective circuit (112) to the voltage output (106) of the plurality of circuits (112), the plurality of circuits (112) configured in parallel with each of other circuits (112) of the plurality of circuits (112); and
switching the plurality of switches (116) of a first circuit (112) of the plurality of circuits (112) on and off at a phase (308) that is different from a phase (308) of at least the plurality of switches (116) of a second circuit (112) of the plurality of circuits (112).

14. The method of claim 13, comprising at least one of the following features:
comprising:
reducing, by the plurality of circuits (112), a ripple (302) of the output voltage (106) according to a number of phases (308) at which the plurality of switches (116) from one or more circuits (112) of the plurality of circuits (112) is turned on or off; and
generating, by the plurality of circuits (112), the voltage output (106) according to a sum of outputs of a subset of the plurality of circuits (112) receiving a plurality of signals to control the respective phases (308) of each of the subset of the plurality of circuits (112) according to which each of the plurality of switches (116) of each of the subset of the plurality of circuits (112) is turned on or off;
comprising:
providing, by a controller (120), a plurality of signals in response to which the plurality of switches of the first circuit (112) of the plurality of circuits (112) switch on and off at a first time that is different than a second time at which the plurality of switches (116) of the second circuit (112) of the plurality of circuits (112) switches on and off;
comprising:
switching the plurality of switches (116) of the first circuit (112) of the plurality of circuits (112) on and off according to a first phase (308);
switching the plurality of switches (116) of the second circuit (112) of the plurality of circuits (112) on and off according to a second phase (308) that is different than the first phase (308); and
switching the plurality of switches (116) of a third circuit (112) of the plurality of circuits (112) on and off according to a third phase (308) that is different than the first phase (308) and different than the second the second phase (308);
comprising:
switching, by the first circuit (112) of the plurality of circuits (112), a first one or more switches (116) of the plurality of switches (116) of the first circuit (112) in response to which a first one or more capacitors (114) of the one or more capacitors (114) of the first circuit (112) to charge responsive to the first one or more switches (116) being switched off and discharge responsive to the first one or more switches (116) being switched on;
switching, by the first circuit (112), a second one or more switches (116) of the plurality of switches (116) of the first circuit (112) in response to which the first one or more capacitors (114) charge responsive to the second one or more switches (116) being switched on and discharge responsive to the second one or more switches (116) being switched off;
providing, by a controller (120) coupled with the plurality of circuits (112), a first plurality of signals to cause the first one or more switches (116) and the second one or more switches (116) to switch on and off at a same time; and
powering an integrated circuit (132) on a die (130) using the voltage output (106) of the plurality of circuits (112), wherein the plurality of circuits (112) are disposed beneath the die (130) and the voltage output (106) is provided to the integrated circuit (132) using one or more vias (602) oriented vertically and coupled with the integrated circuit (132) at the die (130).

15. A system (100), comprising:
a plurality of circuits (112) configured beneath a die (130) to provide a voltage output (106) to an integrated circuit (132) comprised by the die (130) in response to a voltage input (104), each circuit (112) of the plurality of circuits (112) comprising a plurality of switches (116) and one or more capacitors (114);
wherein each circuit (112) of the plurality of circuits (112) is coupled in parallel with each of other circuits (112) of the plurality of circuits (112), wherein an input of each circuit (112) is coupled to the voltage input (104) and wherein an output of each circuit (112) is coupled to the voltage output (106);
wherein the plurality of switches (116) of each circuit (112) of the plurality of circuits (112) is configured to be switched on and off at a phase (308) that is different from a phase (308) of at least one another plurality of switches (116) of another circuit (112) of the plurality of circuits (112); and
wherein the voltage output (106) is coupled with the die (130) using one or more vias (602) oriented vertically.
